**Europäisches Patentamt**

**European Patent Office**

**Office européen des brevets**

(19)

(11) Veröffentlichungsnummer : **0 347 712 B1**

(12)

# EUROPÄISCHE PATENTSCHRIFT

(45) Veröffentlichungstag der Patentschrift :
**12.02.92 Patentblatt 92/07**

(51) Int. Cl.$^5$ : **B29B 7/76**

(21) Anmeldenummer : **89110647.8**

(22) Anmeldetag : **13.06.89**

(54) **Vorrichtung zum Mischen von wenigstens zwei reaktiven Kunststoffkomponenten.**

(30) Priorität : **20.06.88 DE 3820810**

(43) Veröffentlichungstag der Anmeldung :
**27.12.89 Patentblatt 89/52**

(45) Bekanntmachung des Hinweises auf die
Patenterteilung :
**12.02.92 Patentblatt 92/07**

(84) Benannte Vertragsstaaten :
**AT BE CH ES FR GB IT LI NL SE**

(56) Entgegenhaltungen :
**EP-A- 0 084 672
EP-A- 0 246 535
DE-A- 2 145 547
GB-A- 2 022 429**

(73) Patentinhaber : **Krauss-Maffei
Aktiengesellschaft
Krauss-Maffei-Strasse 2
W-8000 München 50 (DE)**

(72) Erfinder : **Schneider, Fritz W., Ing. (grad.)
7095 Industrial Road P.O. Box 6270
Florence, KY 41042 (US)**

EP 0 347 712 B1

Jouve, 18, rue Saint-Denis, 75001 PARIS

## Beschreibung

Die Erfindung bezieht sich auf eine Vorrichtung zum Mischen von wenigstens zwei Kunststoffkomponenten gemäß dem Oberbegriff des Patentanspruchs 1 sowie auf Verfahren zum Steuern einer derartigen Vorrichtung.

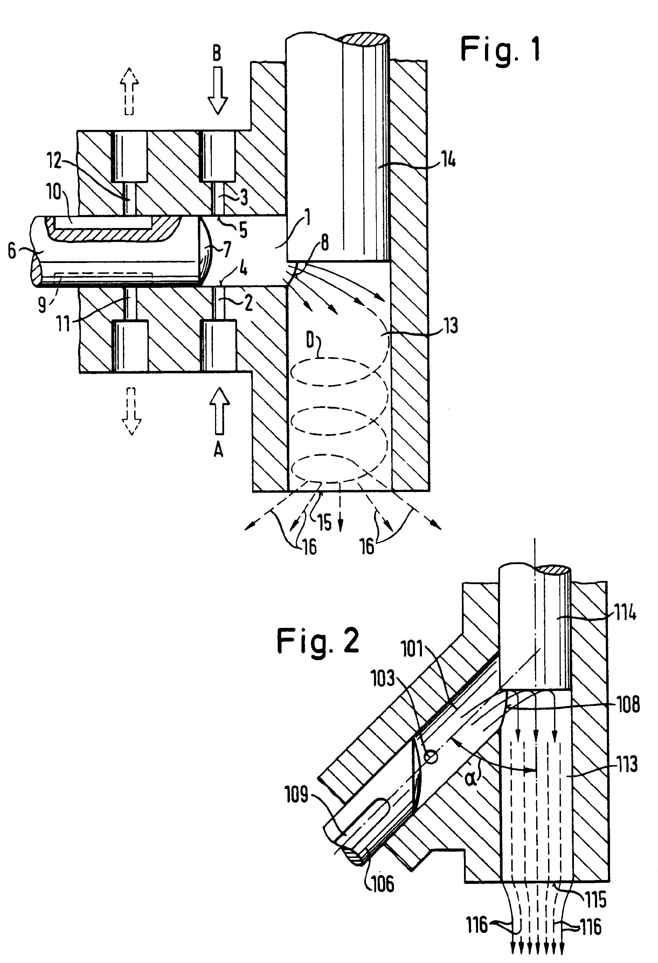

Eine Vorrichtung dieser Art ist beispielsweise aus den DE-PSn 23 27 269, 25 13 492, 26 45 937 und 29 07 938 bekannt, bei der das in der Mischkammer erzeugte Kunststoffgemisch im rechtem Winkel in die nachgeordnete Beruhigungskammer übergeleitet wird (Fig. 1). Bei einer in diesem Winkel von der Auslaßöffnung der Mischkammer auf die gegenüberliegende Wandung der Beruhigungskammer auftreffenden Kunststoffgemischströmung ist nicht auszuschließen, daß sich in der Beruhigungskammer eine mit einem Drall versehene Kunststoffgemischströmung einstellt, die sich beim Austritt aus der Mündung der Beruhigungskammer aufweitet und zum Spritzen führt (Fig. 1).

Die Aufgabe der Erfindung besteht demgegenüber darin, Maßnahmen anzugeben, damit beim Austritt aus der Mündung der Beruhigungskammer stets eine laminare Kunststoffgemischströmung mit ausschließlich zur Achse der Beruhigungskammer koaxial ausgerichteten Strömungskomponenten sichergestellt ist.

Diese Aufgabe wird erfindungsgemäß durch die kennzeichnenden Merkmale des Patentanspruchs 1 gelöst.

Vorteilhafte Weiterbildungen und Ausgestaltungen der erfindungsgemäßen Mischvorrichtung ergeben sich aus den Unteransprüchen 2 bis 5.

Zwei Verfahren zum Steuern der erfindungsgemäßen Vorrichtung sind in den Patentansprüchen 6 und 7 angegeben.

Die Erfindung beruht auf der Überlegung, eine oder mehrere Mischkammern im spitzen Winkel in die Beruhigungskammer entgegen der Austragsrichtung einmünden zu lassen, vorzugsweise in einer gemeinsamen Radialebene. Hierdurch erfährt bzw. erfahren die in die Beruhigungskammer eingeleiteten Komponentengemische durch die aufgezwungene Umkehrströmung eine weitere intensive Durchmischung, wobei gleichzeitig dem Entstehen einer Drallströmung im Auslaufrohr entgegengewirkt wird.

Dieser Vorteil ergibt sich sowohl bei einer Drosselstellung des weiteren Kolbens in der Beruhigungskammer, in welcher die Auslaßöffnung der Mischkammer teilweise verschlossen wird, als auch bei einer zurückgezogenen Stellung des weiteren Kolbens in der Beruhigungskammer.

Die Erindung wird nachstehend an Hand der Zeichnungen näher erläutert. Es zeigen

Fig. 1 In schematischer Darstellung einen Schnitt durch eine Mischkammer mit dem Mischkammerkolben in Mischstellung und einer in bekannter Weise im rechten Winkel angeordneten Beruhigungskammer mit einem weiteren Kolben in Drosselstellung,

Fig. 2 in schematischer Darstellung einen Schnitt durch eine erfindungsgemäß im spitzen Winkel zur Beruhigungskammer angeordnete Mischkammer, wobei sich der weitere Kolben in Drosselstellung befindet,

Fig. 3 einen Schnitt durch eine erfindungsgemäße Vorrichtung mit dem Mischkammerkolben in Mischstellung und dem Kolben der Beruhigungskammer mit einer über die Auslaßöffnung der Mischkammer hinaus zurückgezogenen Stellung,

Fig. 4 einen Schnitt durch eine erfindungsgemäße Vorrichtung mit zwei im spitzen Winkel in eine Beruhigungskammer einmündenden Mischkammern.

Die in Fig. 1 gezeigte Teildarstellung eines bekannten Mischkopfes enthält eine zylindrische Mischkammer 1, in die eine Komponentenzulaufleitung 2 für die Kunststoffkomponente A und eine Komponentenzulaufleitung 3 für die Kunststoffkomponente B einmündet. Die Injektionsöffnungen 4 und 5 dieser Komponentenzulaufleitungen 2 und 3 werden von einem Mischkammerkolben 6 auf- und zugesteuert, der in der Mischkammer 1 reversierbar geführt ist. Der Mischkammerkolben 6 befindet sich in der Mischstellung, in der die Injektionsöffnungen 4 und 5 freigegeben sind, so daß die Kunststoffkomponenten A und B unter hohem Druck in der Mischkammer 1 aufeinandertreffen und sich dort innig durchmischen. In einer Rezirkulationsstellung (nicht dargestellt) befindet sich der Mischkammerkolben in einer Stellung in der dessen Stirnfläche 7 die Auslaßöffnung 8 der Mischkammer 1 bündig abschließt. Die Komponentenzulaufleitungen 2 und 3 sind in dieser Stellung über im Mischkammerkolben 6 ausgebildete Rezirkulationsnuten 9 und 10 mit Komponentenrücklaufleitungen 11 und 12 verbunden, über die die Kunststoffkomponenten A und B in der Nichtmischphase bzw. in der Rezikulationsstellung in die Tanks zurückgeführt werden. In der in der Fig. 1 dargestellten Mischphase tritt das reaktive Kunststoffgemisch über die Auslaßöffnung 8 in die der Mischkammer 1 im rechten Winkel nachgeordnete Beruhigungskammer 13 ein, in der ein weiterer Kolben 14 reversierbar angeordnet ist. Der Kolben 14 befindet sich in einer Drosselstellung, in der dieser die Auslaßöffnung 8 teilweise überdeckt. Das sowohl in einer Drosselstellung als auch in einer die Auslaßöffnung 8 vollkommen freigegebenen Stellung des Kolbens 14 im rechten Winkel aus der Mischkammer austretende und auf die der Auslaßöffnung 8 gegenüberliegende Wand der Beruhigungskammer 13 auftreffende Kunststoffgemisch hat bei dieser Winkelstellung von Mischkammer und Beruhigungskammer die Neigung in einer Drallströmung D weiter zu fließen, wodurch sich der Kunststoffgemischstrom beim Austritt aus der Auslaßöffnung 15 der Beruhigungskammer 13 aufweitet und ein Spritzen (Pfeile 16) zur Folge hat. Dieses Spritzen ist insbesondere beim Gießen von Kunststoffgemisch bzw. Polyurethanschaum in offene Formen unerwünscht, da unzulässige Lufteinschlüsse bzw. Blasen im fertigen Produkt entstehen können.

Die vorgenannten Probleme der Vorrichtungen nach dem Stand der Technik (Fig. 1) werden gemäß Fig. 2 durch die im spitzen Winkel α angeordnete Mischkammer 101 beseitigt, da das aus der Mischkammer 101 austretende Kunststoffgemisch in diesem spitzen Winkel α zunächst entgegen der Austragsrichtung der nachgeordneten Beruhigungskammer 113 strömt und durch eine Umkehrung und Durchströmung zu einem laminaren Kunststoffgemischstrom ausgerichtet wird, so daß an der Auslaßöffnung 115 der Beruhigungskammer 113 eine beruhigte Strömung mit zur Achse der Beruhigungskammer 113 koaxialen Strömungskomponenten (Pfeile 116) austritt. Lufteinschlüsse durch eine Spritzströmung, wie sie in Fig. 1 durch die Pfeile 16 dargestellt ist, kann dadurch weitestgehend vermieden werden.

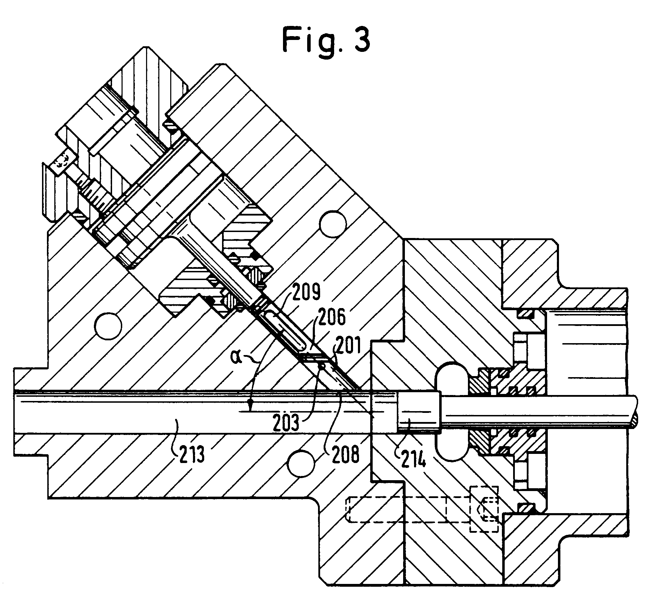

Die Fig. 3 zeigt eine erfindungsgemäße Vorrichtung in Mischstellung mit einem über die Auslaßöffnung 208 der Mischkammer 201 weiter zurückgezogenen Kolben 214, der damit in der Beruhigungskammer 213 zwischen der Stirnfläche des Kolbens 214 und der Auslaßöffnung 208 einen in Vergleich zur Ausführungsform nach Fig. 2, in der sich der Kolben der Beruhigungskammer in Drosselstellung befindet, wesentlich vergrößerten Verwirbelungsraum ausgebildet hat. Der in der Mischkammer 201 reversierbar angeordnete Kolben 206 ist im Vergleich zur Ausführungsformen nach Fig. 1 um 90° verdreht angeordnet, so daß nur eine Rezirkulationsnut 209 sichtbar ist, der eine entsprechende Rezirkulationsnut gegenüberliegt. In gleicher Weise ist in der Darstellung nach den Figuren 2 und 3 nur eine Injektionsöffnung 103 bzw. 203 sichtbar.

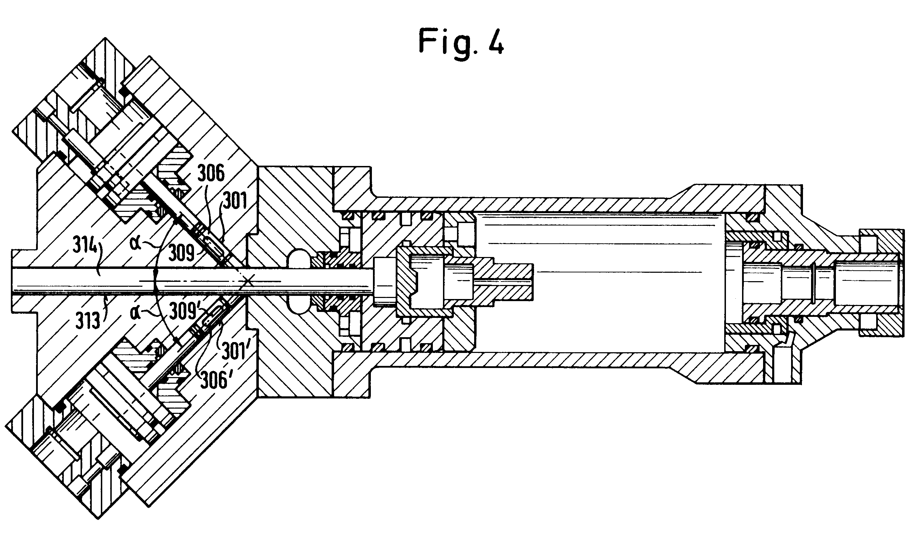

Die Fig. 4 zeigt eine Mischvorrichtung in der Nichtmischphase mit zwei in eine Beruhigungskammer 313 einmündenden Mischkammern 301 und 301′, in denen jeweils ein Kolben 306 und 306′ reversierbar angeordnet ist. Diese Kolben befinden sich in Schließ- bzw. in Rezirkulationsstellung, in der die Kunststoffkomponenten A und B (Fig. 1) über die Rezikulationsnuten 309 und 309′ und die jeweils gegenüberliegenden Rezirkulationsnuten (nicht dargestellt) in die Komponententanks zurückgeleitet werden. Der in der Beruhigungskammer 313 angeordnete Kolben 314 befindet sich in seiner vordersten Stellung, in der das zunächst aus den Mischkammern 301 und 301′ ausgetragene und von den Kolben 306 und 306′ im Reinigungshub ausgestoßene Kunststoffgemisch aus der Beruhigungskammer 313 entfernt ist.

## Patentansprüche

1. Vorrichtung zum Mischen von wenigstens zwei reaktiven Kunststoffkomponenten unter hohem Druck, mit einer zylindrischen Mischkammer (101, 201, 301), in welche die Kunststoffkomponenten injiziert werden, wobei zum Austragen von restlichem reaktivem Kunststoffgemisch innerhalb der Mischkammer ein reversierbarer Kolben angeordnet ist, und mit einer zylindrischen Beruhigungskammer, welche sich an die Mischkammer anschließt und in einem Winkel zur Längsachse der Mischkammer verläuft, wobei in der Beruhigungskammer (113, 213, 313) ein weiterer reversierbarer Kolben angeordnet ist, dadurch gekennzeichnet, daß die Mischkammer (101, 201, 301,) und ggfs. eine oder mehrere weitere Mischkammern (301′) jeweils unter einem spitzen Winkel α von wesentlich kleiner als 90° in einer der Austragsrichtung der Beruhigungskammer (113, 213, 313) entgegengesetzten Richtung in die Beruhigungskammer einmünden.

2. Vorrichtung nach Anspruch 1, **dadurch gekennzeichnet,** daß der Winkel α im Bereich zwischen etwa 30° und 60° liegt.

3. Vorrichtung nach Anspruch 2, **dadurch gekennzeichnet,** daß der Winkel α etwa 45° beträgt.

4. Vorrichtung nach Anspruch 1, **dadurch gekennzeichnet,** daß der reversierbare Mischkammerkolben (106, 206, 306, 306′) für jede reaktive Kunststoffkomponente eine Längsnut aufweist, welche einen Rezirkulationsweg für die zugeordnete Kunststoffkomponente zwischen zwei aufeinanderfolgenden Injektionen steuert.

5. Vorrichtung nach einem der Ansprüche 1 bis 4, **dadurch gekennzeichnet,** daß die Einmündungen sämtlicher Mischkammern (301, 301′) in einer gemeinsame Radialebene der Beruhigungskammer (213) liegen.

6. Verfahren zum Steuern einer Vorrichtung nach den Ansprüchen 1 bis 5, **dadurch gekennzeichnet,** daß in einer ersten Betriebsart (Mischstellung) der Mischkammerkolben (106) die Injektion der reaktiven Kunststoffkomponenten in die Mischkammer (101) freigibt (Mischstellung) und der weitere Kolben (114) die Auslaßöffnung (108) der Mischkammer (101) teilweise verschließt. (Drosselstellung)

7. Verfahren zum Steuern einer Vorrichtung nach den Ansprüchen 1 bis 5, **dadurch gekennzeichnet,** daß in einer zweiten Betriebsart der Mischkammerkolben (206) die Injektion der reaktiven Kunststoffkomponenten in die Mischkammer (201) freigibt (Mischstellung) und der weitere Kolben (214) sich in einer über die Auslaßöffnung der Mischkammer (206) hinaus zurückgezogenen Stellung befindet, in der zwischen der Stirnfläche des weiteren Kolbens (214) und der Auslaßöffnung der Mischkammer (206) ein Verwirbelungsraum bzw. Mischraum gebildet wird.

## Claims

1. Apparatus for mixing at least two reactive synthetic components at high pressure, with a cylindrical mixing chamber (101, 201, 301), into which the synthetic components are injected, a reversible piston being disposed within the mixing chamber for discharging the residual reactive synthetic mixture, and with a cylindrical stilling chamber, which adjoins the mixing chamber and extends at an angle with respect to the longitudinal axis of the mixing chamber, a further reversible piston being disposed in the stilling chamber (113, 213, 313), characterised in that the mixing chamber (101, 201, 301) and possibly one or more further mixing chambers (301′) open into the stilling chamber respectively at an acute angle $\alpha$ of substantially less than 90° in an opposite direction to the discharge direction of the stilling chamber (113, 213, 313).

2. Apparatus according to Claim 1, characterised in that the angle $\alpha$ is in the range between approximately 30° and 60°.

3. Apparatus according to Claim 2, characterised in that the angle $\alpha$ amounts to approximately 45°.

4. Apparatus according to Claim 1, characterised in that for each reactive synthetic component the reversible mixing chamber piston (106, 206, 306, 306′) comprises a longitudinal groove, which controls a recirculation path for the associated synthetic component between two successive injections.

5. Apparatus according to one of Claims 1 to 4, characterised in that the openings of all mixing chambers (301, 301′) lie in a common radial plane of the stilling chamber (213).

6. Method for controlling an apparatus according to Claims 1 to 5, characterised in that in a first type of operation (mixing position) the mixing chamber piston (106) allows the injection of the reactive synthetic components into the mixing chamber (101) (mixing position) and the further piston (114) partly closes off the outlet opening (108) of the mixing chamber (101) (throttling position).

7. Method for controlling an apparatus according to Claims 1 to 5, characterised in that in a second type of operation the mixing chamber piston (206) allows the injection of the reactive synthetic components into the mixing chamber (201) (mixing position) and the further piston (214) is located in a position withdrawn beyond the outlet opening of the mixing chamber (206), in which a turbulence chamber or mixing chamber is formed between the end face of the further piston (214) and the outlet opening of the mixing chamber (206).

## Revendications

1. Dispositif de mélangeage sous haute pression d'au moins deux composants réactifs générateurs de matière plastique, ce dispositif comportant une chambre (101, 201, 301) de mélangeage dans laquelle les composants générateurs de matière plastique sont injectés, un piston à mouvement réversible étant disposé à l'intérieur de la chambre de mélangeage en vue d'évacuer les restes du mélange réactif formateur de matière plastique, et une chambre cylindrique de calmage et de repos, qui est raccordée à la chambre de mélangeage et qui s'étend en formant un angle par rapport à l'axe longitudinal de la chambre de mélangeage, un autre piston à mouvement réversible étant installé dans la chambre (113, 213, 313) de repos, dispositif caractérisé en ce que la chambre (101, 201, 301) de mélangeage et le cas échéant une ou plusieurs autres chambres (301′) de mélangeage débouchent chacune dans la chambre de repos, sous un angle aigu $\alpha$ sensiblement inférieur à 90°, dans une direction opposée à la direction de sortie de la chambre (113, 213, 313) de calmage et de repos.

2. Dispositif selon la revendication 1, caractérisé en ce que l'angle $\alpha$ se situe dans une plage comprise entre approximativement 30° et 60°.

3. Dispositif selon la revendication 2, caractérisé en ce que l'angle $\alpha$ est d'environ 45°.

4. Dispositif selon la revendication 1, caractérisé en ce que le piston (106, 206, 306, 306′), à mouvement réversible, de chambre de mélangeage présente pour chaque composant réactif générateur de matière plastique une gorge longitudinale qui, entre deux injections qui se suivent, commande un trajet de recyclage pour le composant correspondant générateur de matière plastique.

5. Dispositif selon une des revendications 1 à 4, caractérisé en ce que les débouchés de l'ensemble des chambres (301, 301′) de mélangeage se situent dans un plan radial commun de la chambre (213) de calmage et de repos.

6. Procédé de commande d'un dispositif selon les revendications 1 à 5, caractérisé en ce que dans un premier mode de fonctionnement (position de mélangeage), le piston (106) de chambre de mélangeage autorise l'injection des composants réactifs générateurs de matière plastique dans la chambre (101) de mélangeage (position de mélangeage) et en ce que l'autre piston (114) ferme partiellement l'orifice (108) de sortie (position d'étranglement) de la chambre (101) de mélangeage.

7. Procédé de commande d'un dispositif selon les revendications 1 à 5, caractérisé en ce que dans un deuxième mode de fonctionnement le piston (206) de chambre de mélangeage autorise (position de mélangeage) l'injection des composants réactifs générateurs de matière plastique dans la chambre (201) de mélangeage, et en ce que l'autre piston (214) se trouve dans une position de retrait au-delà de l'orifice de sortie de la chambre (206) de mélangeage, position dans laquelle un espace de tourbillonnement, ou espace de mélangeage, est formé entre la surface frontale de l'autre piston (214) et l'orifice de sortie de la chambre (206) de mélangeage.

Fig. 1

Fig. 2

# Fig. 3

Fig. 4